# EUROPEAN PATENT SPECIFICATION

(11) **EP 2 842 074 B1**
(45) Date of publication and mention of the grant of the patent: **23.05.2018**
(21) Application number: 13780837.4
(22) Date of filing: 22.04.2013
(51) Int. Cl.: G06K 7/10, G06K 19/073, H04B 1/38, H04B 5/00, H01Q 1/22

(54) **METHOD AND APPARATUS FOR FACILITATING INTERACTION BETWEEN A RADIO FREQUENCY IDENTIFICATION COMMUNICATIONS CIRCUIT AND A MOBILE TERMINAL**
VERFAHREN UND VORRICHTUNG ZUR ERLEICHTERUNG DER INTERAKTION ZWISCHEN EINER RFID- KOMMUNIKATIONSSCHALTUNG UND EINEM MOBILEN ENDGERÄT
PROCÉDÉ ET APPAREIL PERMETTANT DE FACILITER UNE INTERACTION ENTRE UN CIRCUIT DE COMMUNICATION D'IDENTIFICATION PAR RADIOFRÉQUENCE ET UN TERMINAL MOBILE

(30) Priority: 23.04.2012 US 201213453528
(43) Date of publication of application: 04.03.2015
(73) Proprietor: Nokia Technologies Oy, 02610 Espoo (FI)
(72) Inventor: AHO, Eero, 33820 Tampere (FI); PALIN, Arto, 37830 Viiala (FI); REUNAMÄKI, Jukka, 33820 Tampere (FI)
(74) Representative: Berggren Oy, Tampere
(86) International application number: PCT/FI2013/050441
(87) International publication number: WO 2013/160544

(56) References cited:
- WO-A1-2009/020264
- WO-A1-2009/063121
- WO-A1-2009/063214
- WO-A2-2005/104655
- US-A1- 2002 047 777
- US-B1- 6 400 272
- WANT, R.: 'An Introduction to RFID Technology' IEEE PERVASIVE COMPUTING vol. 5, no. 1, 2006, pages 25 - 33, XP002510139

## Description

### TECHNOLOGICAL FIELD

An example embodiment relates generally to interaction between a mobile terminal and a radio frequency identification (RFID) communications circuit and, more particularly, to interaction between a mobile terminal and an RFID communications circuit carried by the mobile terminal.

WO 2009/063214 A1 discloses a near field RF communicator e.g. RFID transponder or tag, near field communication (NFC) communicator for use within larger device or NFC communications enabled device. Uses include but are not limited to mobile telephones, personal digital assistants (PDAs), computer, smart cards.

### BACKGROUND

Mobile terminals, such as cellular telephones, personal digital assistants (PDAs) or the like, include a wide variety of functionality. Nevertheless, following the manufacture and deployment of the mobile terminal, it may be desirable to enhance or otherwise change the functionality offered by the mobile terminal. Some of the functionality may be enhanced or changed by downloading additional or different software, applications or the like to the mobile terminal with the downloaded software or applications configuring the mobile terminal to perform other functionality.

However, it may sometimes be desirable to enhance or otherwise modify the functionality of a mobile terminal in a manner that may not be accommodated by downloading additional software to the mobile terminal. For example, it may be desirable for a mobile terminal to provide additional functionality that would require additional hardware, such as one or more additional sensors. In these instances, it may be challenging to modify the mobile terminal in such a manner as to provide the hardware necessary to perform the enhanced functionality, thereby potentially limiting the functionality that may be supported by the mobile terminal.

### BRIEF SUMMARY

A method and apparatus are therefore provided to allow the functionality offered by a mobile terminal to be enhanced, even in instances in which the additional functionality requires additional hardware. In this regard, the method and apparatus may facilitate the interaction of a mobile terminal and an RFID communications circuit carried by or otherwise associated with the mobile terminal such that the RFID communications circuit facilitates the provision of the additional functionality following the manufacture and deployment of the mobile terminal. Moreover, the method and apparatus of an example embodiment may permit the mobile terminal to interact with a plurality of RFID communications circuits, either concurrently or at different instances of time, so as to permit the functionality provided by a mobile terminal to be more readily modified.

In one embodiment, a method is provided that includes causing power to be provided to an RFID communications circuit carried by a mobile terminal following activation of the RFID communications circuit. The method of this embodiment also receives information from the RFID communications circuit and causes an operation to be performed with a processor based upon the information received from the RFID communications circuit.

In another embodiment, an apparatus is provided that includes at least one processor and at least one memory including computer program code with the at least one memory and the computer program code configured to, with the at least one processor, cause the apparatus at least to cause power to be provided to an RFID communications circuit carried by a mobile terminal following activation of the RFID communications circuit. The at least one memory and the computer program code of this embodiment are further configured to, with the at least one processor, cause the apparatus to receive information from the RFID communications circuit and to cause an operation to be performed upon the information received from the RFID communications circuit.

In a further embodiment, a computer program product is provided that includes at least one computer-readable storage medium having computer-executable program code portions stored therein. The computer-executable program code portions include program instructions configured to cause power to be provided to an RFID communications circuit carried by a mobile terminal following activation of the RFID communications circuit. The computer-executable program code portions of this embodiment also include program instructions configured to receive information from the RFID communications circuit and program instructions configured to cause an operation to be performed with a processor based upon the information received from the RFID communications circuit.

In yet another embodiment, an apparatus is provided that includes means for causing power to be provided to an RFID communications circuit carried by a mobile terminal following activation of the RFID communications circuit. The apparatus of this embodiment also includes means for receiving information from the RFID communications circuit and means for causing an operation to be performed with a processor based upon the information received from the RFID communications circuit.

In the foregoing embodiments, various operations may be caused to be performed based upon the information received from the RFID communications circuit including, for example, causing the RFID communications circuit to be programmed for subsequent operation including, for example, opening a browser application to facilitate programming of the RFID communications circuit. In one embodiment, the information received from the information circuit may include an identification of the RFID communications circuit, such that the operation that is caused to be performed is based upon the identification of the RFID communications circuit. Further, the operation that is caused to be performed may include causing a display to be presented upon a user interface of the mobile terminal.

In one embodiment, an apparatus is provided that includes an antenna and a plurality of RFID communications circuit elements switchably connected to the antenna. Each RFID communications circuit element of this embodiment is configurable to perform a respective function. Each of the RFID communications circuit elements of this embodiment is also configured to receive power from a mobile terminal via the antenna following the switchable connection of the respective RFID communications circuit element to the antenna. Each of the RFID communications circuit elements of this embodiment is also configured to provide information to the mobile terminal following the switchable connection of the respective RFID communications circuit element to the antenna. The apparatus of this embodiment is also configured to be carried by a mobile terminal.

The apparatus of one embodiment may also include a cover for the mobile terminal that includes the antenna and the plurality of RFID communications circuit elements. The RFID communications circuit elements of one embodiment may include respective tags configured to be attached to the mobile terminal. In one embodiment, an RFID communications circuit element is configured to be programmed by the mobile terminal following provision of the information to the mobile terminal. The apparatus may also include a plurality of switches, each of which is associated with a respective RFID communications circuit element in order to switchably connect the respective RFID communications circuit element to the antenna. At least one of the switches may be responsive to user input. Additionally, or alternatively, the apparatus may include a sensor such that at least one of the switches is responsive to the sensor. In this embodiment, the sensor may include a multi-level sensor operably connected to one or more switches.

### BRIEF DESCRIPTION OF THE SEVERAL VIEWS OF THE DRAWINGS

Having thus described certain embodiments of the invention in general terms, reference will now be made to the accompanying drawings, which are not necessarily drawn to scale, and wherein:
Figure 1 is a perspective view of a mobile terminal and an RFID communications circuit in accordance with an example embodiment of the present invention;
Figure 2 is a block diagram of an apparatus that may be specifically configured in accordance with an example embodiment of the present invention;
Figure 3 is a schematic representation of an RFID communications circuit;
Figure 4 is a flow chart illustrating the operations performed in accordance with an example embodiment of the present invention;
Figure 5 is a flow chart illustrating the operations performed in accordance with another example embodiment of the present invention;
Figure 6 is a perspective view of a mobile terminal and a plurality of RFID communications circuits in accordance with another example embodiment of the present invention;
Figures 7A and 7B are schematic representations of alternative embodiments of an RFID communications circuit; and
Figure 8 is a perspective view of a mobile terminal and a cover including a plurality of RFID communications circuits in accordance with an example embodiment of the present invention.

### DETAILED DESCRIPTION

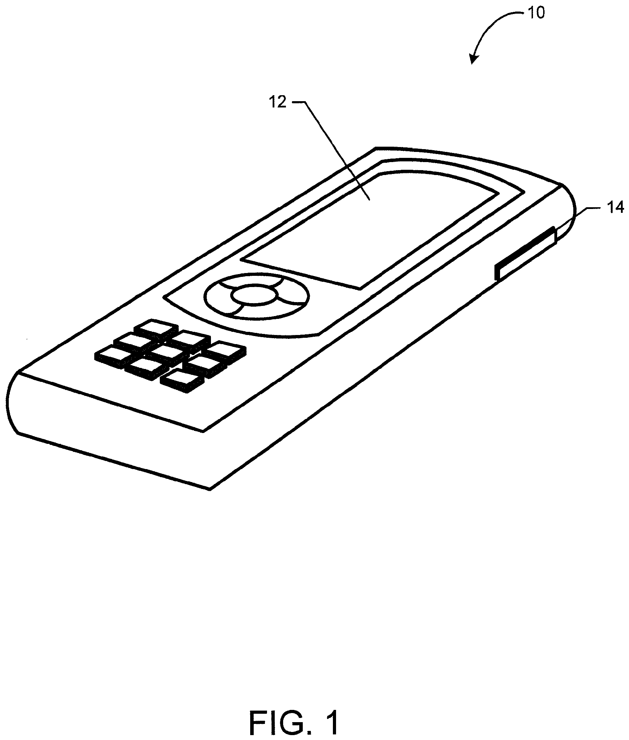

Referring now to Figure 1, the method and apparatus are provided according to an example embodiment in order to facilitate interaction between a mobile terminal 10 and an RFID communications circuit 14. The mobile terminal and the RFID communications circuit may be configured to interact such that the mobile terminal can provide additional functionality by leveraging information provided by the RFID communications circuit. As described below, the RFID communications circuit may be attached to and carried by the mobile terminal following the manufacture and deployment of the mobile terminal. For example, the RFID communications circuit depicted in Figure 1 may be attached, such as by adhesion or otherwise, to a surface of the mobile terminal so as to be carried by the mobile terminal. However, the RFID communications circuit may be carried by the mobile terminal in other manners, such as by being embedded in a cover that is placed upon the mobile terminal, as described below. Moreover, the RFID communications circuit may be associated with the mobile terminal in other manners, as also described below. While a single RFID communications circuit is shown to be carried by the mobile terminal of Figure 1, the mobile terminal may carry two or more RFID communications circuits and, indeed, the RFID communications circuits carried by the mobile terminal may be changed over time as it becomes desirable for the mobile terminal to provide different functionality.

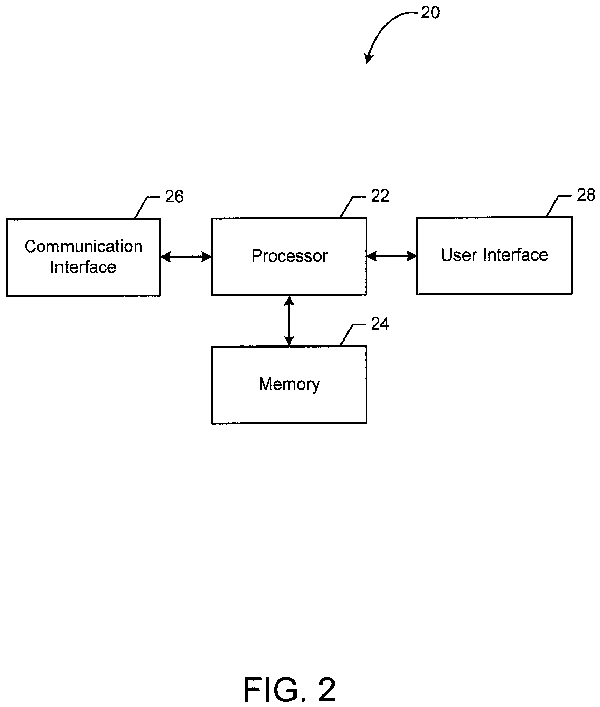

The mobile terminal 10 may be embodied in various manners including as a PDA, pager, mobile television, mobile telephone, gaming device, camera, camera phone, video recorder, audio/video player, radio, global positioning system (GPS) device, navigation device, or any combination of the aforementioned, and other types of voice and text communications systems. Regardless of the type of mobile terminal, the mobile terminal may include or otherwise embody an apparatus 20 as shown, for example, in Figure 2.

In this embodiment, the apparatus 20 may include or otherwise be in communication with a processor 22, a memory 24, a communication interface 26 and a user interface 28. In some embodiments, the processor (and/or co-processors or any other processing circuitry assisting or otherwise associated with the processor) may be in communication with the memory via a bus for passing information among components of the apparatus. The memory may include, for example, one or more non-transitory volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory may be configured to store information, data, applications, instructions or the like for enabling the apparatus to carry out various functions in accordance with an example embodiment of the present invention. For example, the memory could be configured to buffer input data for processing by the processor. Additionally or alternatively, the memory could be configured to store instructions for execution by the processor.

As noted above, the apparatus 20 may, in some embodiments, be a mobile terminal 10 configured to employ an example embodiment of the present invention. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 22 may be embodied in a number of different ways. For example, the processor may be embodied as one or more of various processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 22 may be configured to execute instructions stored in the memory 24 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a computing device) adapted for employing an embodiment of the present invention by further configuration of the processor by instructions for performing the algorithms and/or operations described herein. The processor may include, among other things, a clock, an arithmetic logic unit (ALU) and logic gates configured to support operation of the processor.

The user interface 28 may be in communication with the processor 22 to receive an indication of a user input at the user interface and/or to provide information, such as an audible, visual, mechanical or other output, to the user. As shown in Figure 1, the user interface may include, for example, a display 12, e.g., a touch screen, which may be integral with the remainder of the apparatus 20 or may be remote therefrom and in communication therewith. The user interface may also include other input/output mechanisms and, as such, may optionally include, among other devices or elements, any or all of a speaker, a microphone, a keyboard or the like. In this regard, for example, the processor may comprise user interface circuitry configured to control at least some functions of one or more elements of the user interface, such as, for example, the display. The processor and/or user interface circuitry comprising the processor may be configured to control one or more functions of one or more elements of the user interface through computer program instructions (e.g., software and/or firmware) stored by a memory accessible to the processor (e.g., memory 24 and/or the like).

The apparatus 20 of the illustrated embodiment is configured to communicate with other devices including, RFID communications circuits 14 and, as such, may include a communication interface 26. In these embodiments, the communications interface may be any means such as a device or circuitry embodied in either hardware, software, or a combination of hardware and software that is configured to receive and/or transmit data from/to the devices that are interacting. In this regard, the communication interface may include, for example, an antenna (or multiple antennas) and supporting hardware and/or software for enabling communications with a wireless communication network. Additionally or alternatively, the communication interface may include an antenna and supporting hardware and/or software for supporting RFID communications, such as with one or more RFID communications circuits. In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

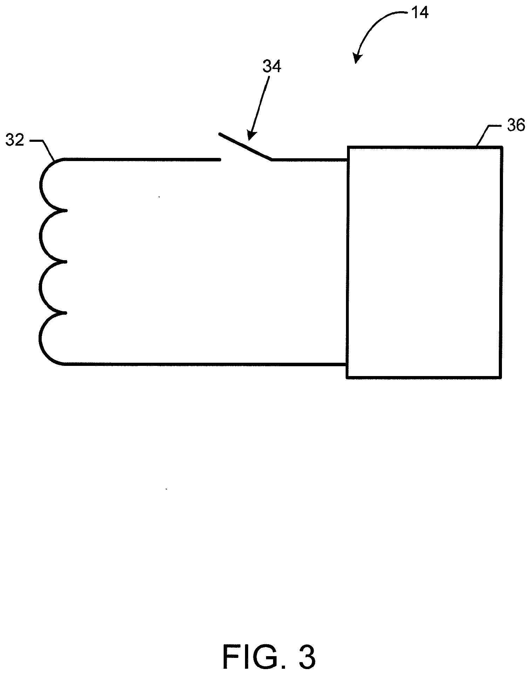

The RFID communications circuit 14 may be embodied in various manners. See Figure 3. In one embodiment, however, the RFID communications circuit includes an antenna 32 and an RFID communications circuit element 36 connected to the antenna by a switch 34. The antenna may be configured to receive signals from the mobile terminal 10, such as RFID communications signals. As such, in one embodiment, the RFID communications circuit, or at least the antenna of the RFID communications circuit, is positioned relative to a mobile terminal so as to be proximate to the RFID communications antenna of the mobile terminal. The RFID communications circuit element may be any of a variety of circuit elements depending upon the desired functionality to be supported or provided by the RFID communications circuit. For example, the RFID communications circuit element may include one or more sensors, such as a temperature sensor, an accelerometer, a light sensor, a magnetic sensor, a humidity sensor or the like. The RFID communications circuit element may be embodied in various manners, but, in one embodiment, is embodied as an integrated circuit (IC).

The RFID communications circuit 14 may be configured to transmit and/or receive various types of RFID signals. In one embodiment, the RFID communications circuit is embodied as a near field communications (NFC) circuit and is correspondingly configured to transmit and/or receive NFC signals. By way of example, the RFID communications circuit is hereinafter described as an NFC circuit having an antenna 32, NFC circuit element 36 and switch 34, although other types of RFID communications circuits may be employed in other embodiments.

The switch 34 may be a mechanical switch configured to be responsive to user input so as to be manually actuated in order to be closed and opened. In the illustrated embodiment, the switch would be closed in order to permit the mobile terminal 10 to communicate with the NFC circuit 14, and would be open in order to prevent communications between the mobile terminal and the NFC circuit. In another embodiment, the switch may be actuated based upon one or more parameters. In an embodiment in which the NFC circuit elements includes one or more sensors, for example, the switch may be responsive to the output of a respective sensor so as to be actuated, such as to be closed, in an instance in which the output of the sensor satisfies a predefined threshold. For example, the switch may be responsive to a temperature sensor so as to be actuated in instances in which the temperature is above a predefined threshold. Alternatively, the switch may be responsive to a light sensor so as to be actuated in instances in which the mobile terminal is exposed to daylight. In another embodiment, the switch may be responsive to an accelerometer so as to be actuated in instances in which the mobile terminal is in motion. Still further, the switch may be responsive to a plurality of sensors so as to be actuated in instances in which a combination of the outputs provided by the sensors satisfies respective predefined thresholds. In yet another embodiment, the switch may be responsive to a combination of manual actuation attributable, for example, to user input and the parameters measured or sensed by one or more sensors.

Regardless of the manner of actuation, once the switch 34 is actuated such that the antenna 32 is in communication with the NFC circuit element 34, the mobile terminal 10 may communicate with the NFC circuit 14 and may perform various operations in response to and based upon the functionality that is supported by the NFC circuit. For example, in instances in which the NFC circuit includes one or more sensors, the mobile terminal may be configured to perform various functions based upon the outputs provided or the parameters measured by the sensor(s), such as by providing functionality that is conditioned upon the satisfaction of predefined criteria by the outputs provided or the parameters measured by the sensor.

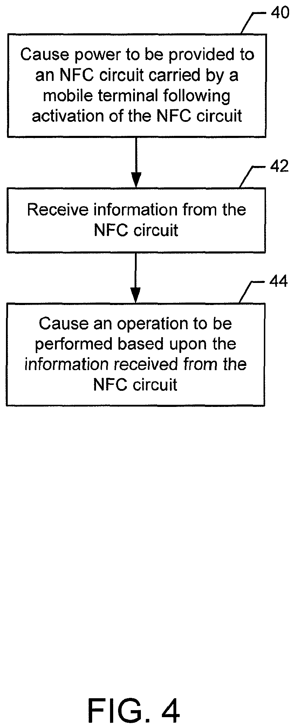

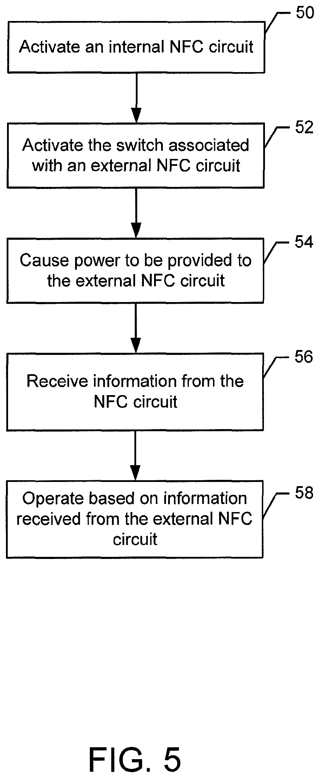

By way of example, the operations performed by an apparatus 20 in accordance with one embodiment of the present invention taken from the perspective of the mobile terminal 10 are illustrated in Figures 4 and 5. In this regard, Figures 4 and 5 are flowcharts of a method and program product according to an example embodiment of the invention. It will be understood that each block of the flowcharts, and combinations of blocks in the flowcharts, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory 24 of the apparatus and executed by the processor 22 of the apparatus. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart blocks. These computer program instructions may also be stored in a computer-readable memory that may direct a computer or other programmable apparatus to function in a particular manner, such that the instructions stored in the computer-readable memory produce an article of manufacture which implements the functions specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart blocks.

Accordingly, blocks of the flowcharts support combinations of means for performing the specified functions and combinations of operations for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Referring now to block 40 of Figure 4, the apparatus 20 may include means, such as the processor 22, the communication interface 26 or the like, for causing power to be provided to an NFC circuit 14 carried by or otherwise associated with the mobile terminal 10 following actuation of the NFC circuit. In this regard, the NFC circuit is initially actuated, such as by actuation of the switch 34. As described above, the actuation of the switch may be accomplished in various manners including by user input or by satisfaction of one or more predefined criteria by the NFC circuit element 36. Once the NFC circuit has been actuated, the apparatus, such as the processor, the communication interface or the like, may provide power by causing NFC signals to be transmitted that are received by the antenna 32 and are provided to the NFC circuit element, which may include a battery, such as a capacitor or the like, that may be charged by the power represented by the signals received by the antenna. In this regard, the NFC circuit may be passive so as not to have an independent power supply, but to, instead, draw its power from signals that are received by the antenna, such as from the mobile terminal.

As shown in more detail in Figure 5 which provides another illustration of a process of establishing communications between a mobile terminal 10 and a an NFC circuit 14, the communications interface 26 of the mobile terminal may be initially activated so as to activate the portion of the communication interface that provides for NFC, e.g., the internal NFC circuit. See block 50. Thereafter, the switch 34 of the NFC circuit may be activated and then power may be provided to the NFC circuit, e.g., the external NFC circuit, as described above. See blocks 52 and 54 of Figure 5.

Once the NFC circuit 14 has been provided power, the apparatus 20 may include means, such as the processor 22, the communication interface 26 or the like, for receiving information from the NFC circuit. See block 42 of Figure 4 and block 56 of Figure 5. In this regard, the information may be provided by the NFC circuit, such as by transmission of the information by the antenna 32 and reception of the information by the NFC antenna of the mobile terminal 10 for provision to the processor 22. The information may be provided by the NFC circuit of this embodiment periodically, upon the occurrence of an event, in accordance with a predefined schedule or on some other basis. Alternatively, the apparatus embodied by the mobile terminal, such as the processor, the communication interface or the like, may query the NFC circuit and request that the NFC circuit provide information, thereby effectively pulling the information from the NFC circuit. In this embodiment, the mobile terminal may query the NFC circuit periodically, upon the occurrence of an event, in accordance with a predefined schedule or on some other basis.

The NFC circuit 14 may provide a variety of information. For example, the NFC circuit may provide information, such as an identifier, that identifies the NFC circuit. Additionally, or alternatively, the NFC circuit may provide information that includes one or more measured parameters, such as temperature, humidity, the presence of light, acceleration or the like. In this regard, the information regarding the various parameters may be provided in terms of the actual measurement and/or in terms of the satisfaction of one or more thresholds by the measurements. Additionally or alternatively, the NFC circuit may provide a link or an address, e.g., a Uniform Resource Locator (URL), to a webpage, information about an application that is to be activated by the mobile terminal 10, program instructions to be executed by the mobile terminal or the like. Still further, the NFC circuit may be configured to provide other types of information in other embodiments.

As shown in block 44 of Figure 4 and block 58 of Figure 5, the apparatus 20 may also include means, such as the processor 22 or the like, for causing an operation to be performed based upon the information received from the NFC circuit 14. Various operations may be performed based upon the information received from the NFC circuit. For example, the apparatus, such as the processor, may be configured to open a web browser utilizing an address, e.g., a uniform resource locator (URL), included within the information received from the NFC circuit, open an application referenced by the information received from the NFC circuit or execute program instructions included in the information received from the NFC circuit. As one example of an operation that is performed by the mobile terminal 10, the apparatus, such as the processor, may be configured to program the NFC circuit based upon the information received from the NFC circuit. The programming of the NFC circuit may be performed prior to operation of the NFC circuit, or the programming may be in the form of reprogramming that is performed following use of the NFC circuit. In this regard, the apparatus may cause an application, such as a browser application, e.g., a web browser, to be opened, such that a predefined screen may be presented upon the display 12. In one embodiment, the predefined screen may solicit one or more parameters from the user that may, in turn, be communicated to the NFC circuit in order to configure the NFC circuit. By way of example, the NFC circuit element 36 may include a sensor. As such, the user may be queried via the screen presented upon the display for one or more values or settings. The apparatus, such as the processor, the communication interface 26 or the like, may then communicate the values or settings to the NFC circuit with the values or settings thereafter serving as the predefined thresholds against which the parameters measured by the sensor is compared. As such, the NFC circuit may be configured to notify the mobile terminal in an instance in which a parameter measured by the sensor satisfies the predefined threshold that have been defined, for example, by the user via the screen presented upon the display of the mobile terminal. While one example of the programming of the NFC circuit has been provided, the apparatus, such as the processor, the communication interface or the like, may be configured to differently program the NFC circuit in other embodiments.

In another embodiment in which the information provided by the NFC circuit 14 includes the identification of the NFC circuit, the apparatus 20, such as the processor 22 or the like, may be configured to cause an operation to be performed based upon the identification of the NFC circuit. In this regard, the apparatus, such as the processor, the memory 24 or the like, may include or store a plurality of predefined operations or features, each associated with one or more NFC circuits. In response to the identification of a respective NFC circuit, the apparatus, such as the processor, may determine the predefined operation or feature associated with the respective NFC circuit and may, in turn, activate and commence performance of the operation or feature that had been previously disabled or otherwise inactive.

Still further, the apparatus 20, such as the processor 22, the user interface 28 or the like, may cause an operation to be performed based upon the information received from the NFC circuit 14 by presenting information upon the display 12 of the mobile terminal 10. As described above, the information presented upon the display may solicit input from the user that may, in turn, be utilized to configure or otherwise program the NFC circuit or the information that is presented upon the display may be provided for other purposes, such as to provide information to the user including, for example, information provided by the NFC circuit, e.g., parameters measured by the sensor(s), such as temperature, humidity, acceleration or the like.

The mobile terminal 10 and the NFC circuit 14 may be configured to repeatedly communicate via NFC. For example, the mobile terminal may repeatedly query the NFC circuit for information, such as on a periodic or other basis. Additionally, or alternatively, the NFC circuit may provide information to the mobile terminal in instances in which the information has not been solicited, such as in response to the satisfaction of a predefined threshold, upon the expiration of a timer, upon detection of a predefined event or the like. In some instances in which the switch 34 is configured to remain "on" following activation, the NFC circuit may be deactivated, such as by opening the switch 34 in response to user input and/or in response to the failure of one or more parameters that are measured by the NFC circuit element 36 to satisfy a predefined threshold and/or after a predefined time delay. In other embodiments, the switch may be configured to remain activated for only a period of time following its initial activation and will then be deactivated, thereby allowing for communications with the mobile terminal without any meaningful interruption. For example, a user may mechanically actuate the switch, which then remains activated so long as the user continues the mechanical actuation, but which is deactivated upon cessation of the mechanical actuation. As another example, the NFC circuit element may include a temperature sensor such that the switch is activated for only a predefined time period in response to the temperature satisfying a threshold so as to permit the NFC circuit to report the temperature to the mobile terminal. Thereafter, the mobile terminal and the NFC circuit may cease communications while the NFC circuit is deactivated, with such communication commencing again upon reactivation of the NFC circuit.

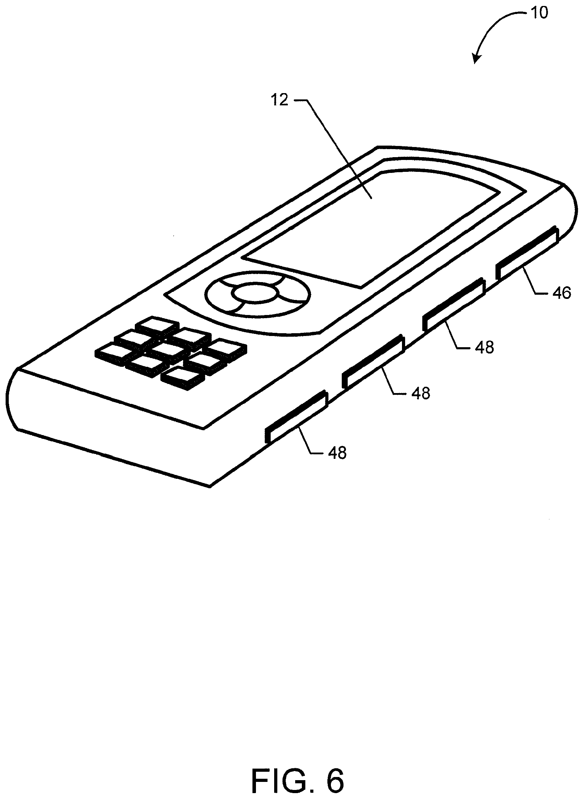

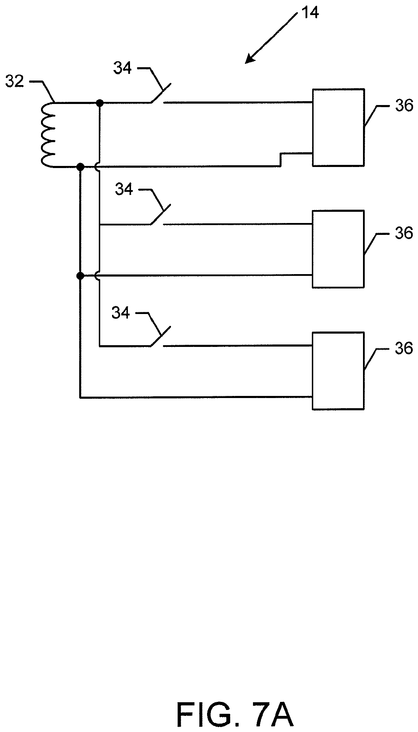

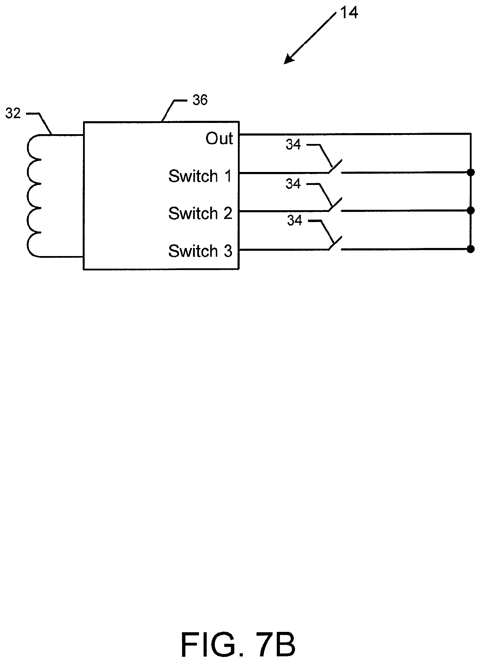

As noted above, the NFC circuit 14 may be removed or otherwise disassociated from the mobile terminal 10, such as by detaching the NFC circuit from the mobile terminal. A different NFC circuit may then be attached to the mobile terminal and may interact with the mobile terminal in the manner described above. In one embodiment, a plurality of NFC circuits may be carried by the mobile terminal, such as by being attached to different portions of the housing of the mobile terminal. Each NFC circuit may provide different functionality to the mobile terminal. In this embodiment, each of the NFC circuits may independently communicate with the mobile terminal. In one embodiment illustrated in Figure 6, a plurality of NFC circuits 48 may be carried by the mobile terminal. In order to avoid redundancy, each of the NFC circuits may utilize a single antenna 46 for communication with the mobile terminal. As such, each NFC circuit may include a switch 34 and an associated NFC circuit element 36. As shown in Figure 7A, however, the NFC circuit element of each NFC circuit may be switchably connected to the single antenna such that each of the NFC circuits communicates with the mobile terminal via the same antenna. Referring now to Figure 7B, an NFC circuit of another embodiment is illustrated. In this embodiment, the NFC circuit includes a single integrated circuit that includes a plurality of NFC circuits, e.g., three NFC circuits in this example. Each NFC circuit may be associated with an individual switch that connects the respective NFC circuit with the output (labeled "Out" in Figure 7B) which, in turn, is connected to the antenna 32.

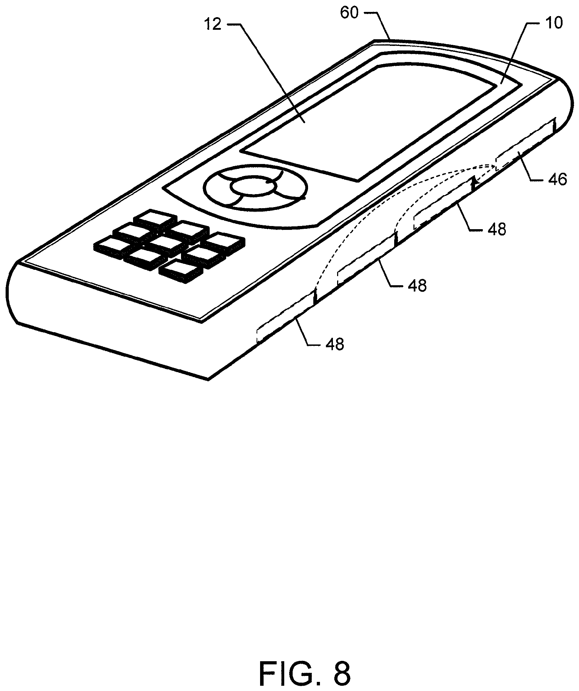

In one embodiment shown in Figure 8, one or more NFC circuits 48 may be embedded within or otherwise carried by a cover 60 that, in turn, is mounted upon and carried by the mobile terminal 10. In this regard, the NFC circuits embedded within the cover may communicate with the mobile terminal in the manner described above. In the illustrated embodiment shown in Figure 8, a single antenna 46 may be connected, such as by wireline connections to each of a plurality of NFC circuits so as to provide for communications between each of the NFC circuits and the mobile terminal. By being embedded within a cover, the cover may provide protection to the NFC circuits, such as by providing water resistance, shock proofing or the like. A plurality of covers may be provided, each of which may be individually mounted upon a mobile terminal. By including different NFC circuits or different combinations of NFC circuits within each cover, the functionality of the mobile terminal may be differently configured by inserting the mobile terminal within various respective covers.

While NFC circuits 14 are described to be carried by and to interact with a mobile terminal 10 by being either attached to a mobile terminal or included within a cover 60 of a mobile terminal, the NFC circuits may be carried proximate the mobile terminal in other manners. For example, the NFC circuits may be embedded within an item of clothing, such as a jacket. In this regard, the NFC circuit may be positioned in a jacket or other article of clothing proximate a pocket in which a mobile terminal will be placed so as to permit the mobile terminal and the NFC circuit to interact in the manner described above.

## Claims

1. A method comprising:
causing power to be provided to a plurality of radio frequency identification, RFID, communications
circuits via an antenna following switchable connection of the plurality of RFID communications circuits to the antenna, wherein the antenna and the plurality of RFID communications circuits are carried by a mobile terminal and the plurality of RFID communications circuits are switchably connected to the antenna;
receiving information from the plurality of RFID communications circuits following switchable connection of the plurality of RFID communications circuits to the antenna; and
causing a respective operation to be performed with a processor based upon the information received from the plurality of RFID communications circuits.

2. A method according to Claim 1 wherein causing the respective operation to be performed comprises causing the plurality of RFID communications circuits to be programmed for subsequent operation.

3. A method according to Claim 2 wherein causing the plurality of RFID communications circuits to be programmed comprises opening a browser application to facilitate programming of the plurality of RFID communications circuits.

4. A method according to Claim 1 wherein the information received from the plurality of RFID communications circuits includes an identification of the plurality of RFID communications circuits, and wherein causing the respective operation to be performed comprises causing a predefined operation to be performed based upon the identification of the plurality of RFID communications circuits.

5. A method according to Claim 1 wherein causing the respective operation to be performed comprises at least one of causing a display to be presented upon a user interface of the mobile terminal, opening a web browser utilizing an address included within the information received from the plurality of RFID communications circuits, opening an application referenced by the information received from the plurality of RFID communications circuits or executing program instructions included in the information received from the plurality of RFID communications circuits.

6. An apparatus comprising:
an antenna; and
a plurality of radio frequency identification RFID, communications circuits switchably connected to the antenna, wherein each RFID communications circuit is configured to perform a respective function,
wherein each of the RFID communications circuits is configured to receive power from a mobile terminal via the antenna following switchable connection of the respective RFID communications circuit to the antenna,
wherein each of the RFID communications circuits is configured to provide information to the mobile terminal following switchable connection of the respective RFID communications circuit to the antenna, and
wherein the apparatus is configured to be carried by a mobile terminal.

7. An apparatus according to Claim 6 further comprising a cover for the mobile terminal that includes the antenna and the plurality of RFID communications circuits.

8. An apparatus according to Claim 6 wherein the RFID communications circuits comprise respective tags configured to be attached to the mobile terminal.

9. An apparatus according to Claim 6 wherein an RFID communications circuit is configured to be programmed by the mobile terminal following provision of the information to the mobile terminal.

10. An apparatus according to Claim 7 further comprising a plurality of switches, each associated with a respective RFID communications circuit in order to switchably connect the respective RFID communications circuit with the antenna.

11. An apparatus according to Claim 10 wherein at least one of the switches is responsive to user input.

12. An apparatus according to Claim 10 further comprising a sensor, wherein at least one of the switches is responsive to the sensor.

13. An apparatus according to Claim 12 wherein the sensor comprises a multi-level sensor operably connected to one or more switches.

## Patentansprüche

1. Verfahren, das Folgendes umfasst:
Veranlassen, dass Strom mehreren Funkfrequenzidentifikation-Kommunikationsschaltkreisen bzw. RFID-Kommunikationsschaltkreisen über eine Antenne zugeführt wird, auf eine schaltbare Verbindung der mehreren RFID-Kommunikationsschaltkreise mit der Antenne folgend, wobei die Antenne und die mehreren RFID-Kommunikationsschaltkreise von einem Mobilendgerät getragen werden und die mehreren RFID-Kommunikationsschaltkreise schaltbar mit der Antenne verbunden sind;
Empfangen von Informationen von den mehreren RFID-Kommunikationsschaltkreisen, auf die schaltbare Verbindung der mehreren RFID-Kommunikationsschaltkreise mit der Antenne folgend; und
Veranlassen, dass eine jeweilige Operation mit einem Prozessor durchgeführt wird, auf Grundlage der von den mehreren RFID-Kommunikationsschaltkreisen empfangenen Informationen.

2. Verfahren nach Anspruch 1, wobei Veranlassen, dass die jeweilige Operation durchgeführt wird, Veranlassen, dass die mehreren RFID-Kommunikationsschaltkreise für nachfolgenden Betrieb programmiert werden, umfasst.

3. Verfahren nach Anspruch 2, wobei Veranlassen, dass die mehreren RFID-Kommunikationsschaltkreise programmiert werden, Öffnen einer Browser-Anwendung zum Erleichtern des Programmierens der mehreren RFID-Kommunikationsschaltkreise umfasst.

4. Verfahren nach Anspruch 1, wobei die von den mehreren RFID-Kommunikationsschaltkreisen empfangenen Informationen eine Identifikation der mehreren RFID-Kommunikationsschaltkreise beinhaltet und wobei Veranlassen, dass die jeweilige Operation durchgeführt wird, Veranlassen, dass eine vordefinierte Operation durchgeführt wird, auf der Grundlage der Identifikation der mehreren RFID-Kommunikationsschaltkreise umfasst.

5. Verfahren nach Anspruch 1, wobei Veranlassen, dass die jeweilige Operation durchgeführt wird, Veranlassen, dass eine Anzeige auf einer Benutzerschnittstelle des Mobilendgeräts präsentiert wird und/oder Öffnen eines Webbrowsers unter Verwendung einer innerhalb der von den mehreren RFID-Kommunikationsschaltkreisen empfangenen Informationen und/oder Öffnen einer Anwendung, auf die durch die von den mehreren RFID-Kommunikationsschaltkreisen empfangenen Informationen verwiesen wird, und/oder Ausführen von Programmanweisungen, die in den von den mehreren RFID-Kommunikationsschaltkreisen empfangenen Informationen enthalten sind, umfasst.

6. Vorrichtung, die Folgendes umfasst:
eine Antenne; und
mehrere schaltbar mit der Antenne verbundene Funkfrequenzidentifikation-Kommunikationsschaltkreise bzw. RFID-Kommunikationsschaltkreise, wobei jeder RFID-Kommunikationsschaltkreis ausgelegt ist zum Durchführen einer jeweiligen Funktion, wobei jeder der RFID-Kommunikationsschaltkreise ausgelegt ist zum Empfangen von Strom von einem Mobilendgerät über die Antenne, auf eine schaltbare Verbindung des jeweiligen RFID-Kommunikationsschaltkreises mit der Antenne folgend,
wobei jeder der mehreren RFID-Kommunikationsschaltkreise ausgelegt ist zum Zuführen von Informationen zu dem Mobilendgerät, auf die schaltbare Verbindung des jeweiligen RFID-Kommunikationsschaltkreises mit der Antenne folgend, und
wobei die Vorrichtung dafür ausgelegt ist, von einem Mobilendgerät getragen zu werden.

7. Vorrichtung nach Anspruch 6, ferner umfassend eine Hülle für das Mobilendgerät, die Antenne und die mehreren RFID-Kommunikationsschaltkreise enthaltend.

8. Vorrichtung nach Anspruch 6, wobei die RFID-Kommunikationsschaltkreise jeweilige Tags umfassen, die dafür ausgelegt sind, an dem Mobilendgerät angebracht zu werden.

9. Vorrichtung nach Anspruch 6, wobei ein RFID-Kommunikationsschaltkreis dafür ausgelegt ist, durch das Mobilendgerät programmiert zu werden, auf das Bereitstellen der Informationen für das Mobilendgerät folgend.

10. Vorrichtung nach Anspruch 7, ferner umfassend mehrere Schalter, von denen jeder mit einem jeweiligen RFID-Kommunikationsschaltkreis verknüpft ist, um den jeweiligen RFID-Kommunikationsschaltkreis mit der Antenne schaltbar zu verbinden.

11. Vorrichtung nach Anspruch 10, wobei mindestens einer der Schalter auf eine Benutzereingabe reagiert.

12. Vorrichtung nach Anspruch 10, ferner umfassend einen Sensor, wobei mindestens einer der Schalter auf den Sensor reagiert.

13. Vorrichtung nach Anspruch 12, wobei der Sensor einen Mehrniveausensor umfasst, der betreibbar mit einem oder mehreren Schaltern verbunden ist.

## Revendications

1. Procédé comprenant :
la fourniture de puissance à une pluralité de circuits de communication d'identification par radiofréquence RFID par l'intermédiaire d'une antenne suite à la connexion commutable de la pluralité de circuits de communication RFID à l'antenne, dans lequel l'antenne et la pluralité de circuits de communication RFID sont portés par un terminal mobile et la pluralité de circuits de communication RFID est connectée de manière commutable à l'antenne ;
la réception d'informations depuis la pluralité de circuits de communication RFID après la connexion commutable de la pluralité de circuits de communication RFID à l'antenne ; et
l'exécution d'une opération respective avec un processeur en fonction des informations reçues depuis la pluralité de circuits de communication RFID.

2. Procédé selon la revendication 1 dans lequel l'exécution de l'opération respective comprend la programmation de la pluralité de circuits de communication RFID pour une opération suivante.

3. Procédé selon la revendication 2 dans lequel la programmation de la pluralité de circuits de communication RFID comprend l'ouverture d'une application de navigation pour faciliter la programmation de la pluralité de circuits de communication RFID.

4. Procédé selon la revendication 1 dans lequel les informations reçues depuis la pluralité de circuits de communication RFID comportent une identification de la pluralité de circuits de communication RFID, et dans lequel l'exécution de l'opération respective comprend l'exécution d'une opération prédéfinie en fonction de l'identification de la pluralité de circuits de communication RFID.

5. Procédé selon la revendication 1 dans lequel l'exécution de l'opération respective comprend au moins l'une des étapes suivantes parmi la présentation d'un affichage sur une interface utilisateur du terminal mobile, l'ouverture d'un navigateur Web en utilisant une adresse incluse dans les informations reçues depuis la pluralité de circuits de communication RFID, l'ouverture d'une application référencée par les informations reçues depuis la pluralité de circuits de communication RFID ou l'exécution d'instructions de programme incluses dans les informations reçues depuis la pluralité de circuits de communication RFID.

6. Appareil comprenant :
une antenne ; et
une pluralité de circuits de communication d'identification par radiofréquence RFID connectés de manière commutable à l'antenne, dans lequel chaque circuit de communication RFID est configuré pour exécuter une fonction respective,
dans lequel chacun des circuits de communication RFID est configuré pour recevoir une puissance depuis un terminal mobile par l'intermédiaire de l'antenne après la connexion commutable du circuit de communication RFID respectif à l'antenne,
dans lequel chacun des circuits de communication RFID est configuré pour fournir des informations au terminal mobile après la connexion commutable du circuit de communication RFID respectif à l'antenne, et
l'appareil étant configuré pour être porté par un terminal mobile.

7. Appareil selon la revendication 6 comprenant en outre un couvercle pour le terminal mobile qui comporte l'antenne et la pluralité de circuits de communication RFID.

8. Appareil selon la revendication 6 dans lequel les circuits de communication RFID comprennent des étiquettes respectives configurées pour être attachées au terminal mobile.

9. Appareil selon la revendication 6 dans lequel un circuit de communication RFID est configuré pour être programmé par le terminal mobile après la fourniture des informations au terminal mobile.

10. Appareil selon la revendication 7 comprenant en outre une pluralité de commutateurs, chacun associé à un circuit de communication RFID respectif afin de connecter de manière commutable le circuit de communication RFID respectif à l'antenne.

11. Appareil selon la revendication 10 dans lequel au moins l'un des commutateurs réagit à une entrée d'utilisateur.

12. Appareil selon la revendication 10 comprenant en outre un capteur, dans lequel au moins l'un des commutateurs réagit au capteur.

13. Appareil selon la revendication 12 dans lequel le capteur comprend un capteur à niveaux multiples connecté fonctionnellement à un ou plusieurs commutateurs.
